# EUROPEAN PATENT APPLICATION

(11) **EP 3 089 457 A1**
(43) Date of publication of application: **02.11.2016**
(21) Application number: 15305662.7
(22) Date of filing: 30.04.2015
(51) Int. Cl.: H04N 21/237, H04N 21/4788, H04N 21/63

(54) **ENHANCED CONTENT CONSUMPTION BY DEEP IMMERSION**

(71) Applicant: Thomson Licensing, 92130 Issy-les-Moulineaux (FR)
(72) Inventor: Bridges, Kennenth, Nashvill TN 37203 (US); Keller, Anton Werner, 8905 Arni (CH); Vettiger, Marc, 8002 Zurich (CH)
(74) Representative: Huchet, Anne

(57) **Abstract**

A method for content consumption by a user includes selection by the user of main content having different selectable auxiliary content portions. In connection with selection of the main content, the user also selects one of the different selectable auxiliary content portions for blending with the main content for sharing with at least one other party. As the user shares consumption the main content and the at least one selected auxiliary content portion with the at least one other party, the user typically receives feedback, from the at least one other user sharing the content.

## Description

### TECHNICAL FIELD

This invention relates to a technique for shared content consumption.

### BACKGROUND ART

Presently, a user can obtain content from a variety of sources for immediate consumption (including viewing on demand) or for storage to enable consumption later (time-shifted viewing). Thus, users no longer remain constrained to consume content on a fixed schedule. The ability of individuals to select content from an ever-increasing array of content sources for viewing either demand or on a time-shifted basis has significantly diluted the cultural experience of large audiences viewing the same content simultaneously with others. However, many users still desire to consume simultaneously the same content with others in their social network.

Various techniques exist for simultaneous sharing of content, some of which appear in the following International Patent Application Publications:
WO2013019259
WO2013133863

While the shared content consumption techniques described in these International Patent Application Publications work well, none provides a mechanism for deep immersive content consumption, including selection of auxiliary content for blending with user-selected content shared with others.

Thus, a need exists for a content consumption technique that overcomes the aforementioned disadvantage.

### BRIEF SUMMARY

Briefly, in accordance with an aspect of the present principles, a method for content consumption by a user includes selection by the user of main content having different selectable auxiliary content portions. In connection with selection of the main content, the user also selects one of the different selectable auxiliary content portions for blending with the main content for sharing with at least one other party. As the user shares consumption the main content and the at least one selected auxiliary content portion with the at least one other party, the user typically receives feedback, from the at least one other user sharing the content.

### BRIEF DESCRIPTION OF THE DRAWINGS

FIGURE 1 depicts a block schematic diagram of a first exemplary embodiment of a Deep Immersive (DI) content consumption system for practicing the shared DI content consumption technique of the present principles;
FIGURE 2 depicts a block schematic diagram of a second exemplary embodiment of a DI content consumption system for practicing the shared DI content consumption technique of the present principles;
FIGURE 3 depicts a block schematic diagram of a first embodiment of a DI television set comprising a portion of the DI system of FIGS. 1 and 2;
FIGURE 4 depicts a block schematic diagram of a second embodiment of a DI television set comprising a portion of the DI system of FIGS. 1 and 2;
FIGURES 5A and 5B depicts block schematic diagrams of third and fourth embodiments, respectively, of a DI television set comprising a portion of the DI system of FIGS. 1 and 2;
FIGURE 6 depicts a block diagram of various software elements present in the DI television set of FIGS 3, 4, 5A and 5B;
FIGURE 7 depicts a first mode of operation of the DI systems FIGS. 1 and 2 at a user's premise;
FIGURE 8 depicts a second mode of operation of the DI systems of FIGS. 1 and 2 at a user's premise;
FIGURE 9A depicts a third mode of operation of the DI systems of FIGS. 1 and 2 at a user's premise;
FIGURE 9B depicts a fourth mode of operation of the DI systems of FIGS. 1 and 2 at a user's premise;
FIGURES 10A and 10B collectively depict a fifth mode of operation of the DI systems of FIGS. 1 and 2 at a user's premise;
FIGURE 11 depicts a sixth mode of operation of the DI systems of FIGS. 1 and 2 at a user's premise;
FIGURE 12 depicts an exemplary screen display of the DI television set of FIGS. 1 and 2 for screen organization;
FIGURE 13 depicts an exemplary screen display of the DI television set of the DI system of FIGS. 1 and 2 showing text messaging users sharing content;
FIGURE 14 depicts an exemplary screen display of the DI television set of the DI systems of FIGS. 1 and 2 for scheduling shared content consumption among users;
FIGURE 15 depicts an exemplary screen display of second screen device for use in connection with the DI systems of FIGS. 1 and 2 for scheduling shared content consumption among users;
FIGURE 16 depicts a timing diagram showing the sequence of activities associated with inviting other users to share content using the DI systems of FIGS. 1 and 2;
FIGURE 17 depicts a timing diagram showing the sequence of activities associated with a channel change request during shared content consumption using the DI systems of FIGS. 1 and 2;
FIGURE 18 depicts an arrangement for acquiring immersive auxiliary content portions for use with the DI systems of FIG. 1 and 2; and
FIGURE 19 depicts a timing diagram associated with a technique in accordance with the present principles for synchronizing shared content consumption among users of the DI systems of FIGS. 1 and 2.

### DETAILED DESCRIPTION

In accordance with an aspect of the present principles, two or more users can enjoy shared Deep Immersive Shared Content Consumption, which includes the consumption of main content in the form of audio, video, data, graphics, and/or text. In practice, the main content usually takes the form of an audio/video program, such as movie or television program or a video game. The main content is blended with at least one immersive auxiliary content portion, (e.g., audio, video, data, graphics, and/or text) specific to the user(s) and the main content. Thus, for example, in connection with the shared consumption of a sporting event, e.g., a football or a soccer game, the immersive auxiliary content portion could comprise live background audio from one or more sections of the sporting event venue hosting the game. In addition or in place of such audio, the immersive auxiliary content portion could include video exclusive to one of the teams, such as video capturing images of a particular team along a sideline of the sporting event venue. The immersive auxiliary content portion could constitute live content or pre-recorded content.

In practice, the immersive auxiliary content portions typically originate from external sources. For example, the same content source providing main content (the movie or television program shared among two or more users) could also provide an immersive auxiliary content portion associated with that main content. Alternatively, a different content provider could provide one or more immersive auxiliary content portions as compared to the main content. One or more users sharing main content could themselves originate one or more immersive auxiliary content portions.

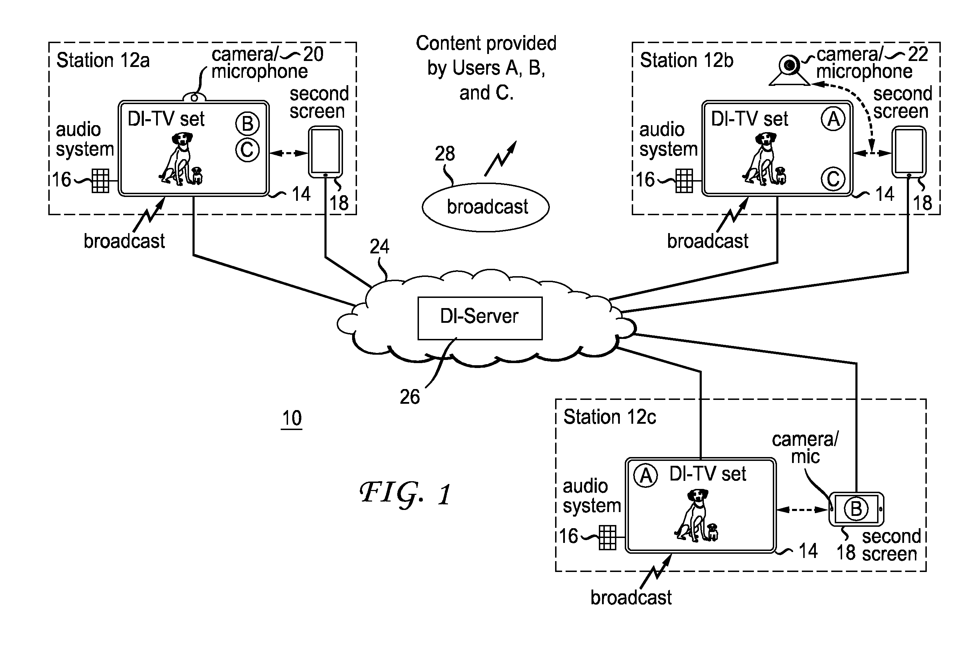

FIGURE 1 depicts a block schematic diagram of a first exemplary embodiment 10 of a Deep Immersive (DI) shared content consumption system in accordance with an aspect of the present principles for enabling deep-immersive shared content consumption as discussed hereinafter. The DI shared content consumption system 10 includes a plurality of stations, 12a, 12b, 12c,...12*ₙ*, where *n* is a integer greater than unity, each associated with a corresponding one of Users A, B, C, D...N, respectively. For ease of simplicity, only stations 12a, 12b, and 12c appear in FIG. 1, associated with Users A, B, and C, respectively, although a typical DI shared content consumption system 10 could include many more stations. The stations, illustratively depicted by the stations 12a, 12b, and 12c, share similar structures so like reference numbers serve to identify like elements. Each of the stations 12a, 12b, and 12c resides at the premise (e.g., home or apartment) of a corresponding one of the Users A, B, and C, respectively. Each station typically includes a Deep Immersive (DI) television set 14 described in detail hereinafter, that enables the user at the corresponding station to consume main content (e.g. a movie or television program) along with at least one auxiliary immersive content portion, which as discussed can include audio, video text, graphics and/or data or any combination thereof. Additionally, the DI television set 14 at each station enables the user at that station to exchange audio, video text, graphics and/or data or any combination thereof with the DI television sets at one or more other stations.

In addition to the DI television set 14, each station typically includes an outboard audio system 16, which at the very least, comprises an external speaker. In practice, the audio system 16 typically comprises a more elaborate arrangement of devices, including but not limited to one or more pre-amplifiers, amplifiers, equalizers, audio processors or any combination thereof, as well as an arrangement of speakers for achieving stereo or surround sound in accordance with any of the various current or proposed surround sound formats. While the audio system 16 typically exists in a standalone form, the functionality of some or all of the audio system reside in (i.e., be integrated with) the DI television set 14.

Although not essential for its operation, each of the stations 12a, 12b, and 12c can include a second screen device 18, typically in the form of a laptop computer, tablet, smart phone or the like, that interfaces with the DI set 14. The second screen device 18 allows the user at each station to control various tasks, including but not limited to selection of main content, selection of one or more auxiliary immersive content portions, as well as selection of users for sharing the main content and the one or more auxiliary content portions. The second screen device 18 at each station can also control various functions associated with the DI television set 14, such as changing the channel, adjusting the volume, and even turning the television set off and on. Additionally, each second screen device has the capability of replicating content, including the main content or one or more of the auxiliary immersive content portions or other content related or unrelated thereto.

As discussed, each of the stations 12a, 12b, and 12c has the capability of exchanging audio, video text, graphics and/or data with one or more other stations so that the users at those stations can interact with each other. For example, the DI television set 14 at the station 12a can include a camera and microphone arrangement 20 integrated with the DI television set 14 at that station for capturing the image and audio of the User A. By using his or her second screen device 18, the user A at the station 12a can share graphics, text and/or data with the users at the other stations, together with that user's audio and video image, or separately therefrom. In contrast to the station 12a, which makes use the camera and microphone arrangement 20 integrated with the DI television set 14, the station 12b makes use of a standalone camera and microphone apparatus 22. Just as the User A at the station 12a makes use of his or her second screen device 18 to share graphics, text and/or data, the User B at station 12b can use his or her second screen device 18 for that purpose as well. At station 12c, the User C makes use of built-in camera and microphone in his or her second screen device 18 for sending that users video and audio to other stations, in addition to using the second screen device to share graphics, text and/or data.

A communications network 24 links together the stations (e.g., the stations 12a, 12b, and 12c) of the DI shared content consumption system 10. The communications network 24 can include an open network such as the Internet or a closed network, for example, a telecommunications service provider, a cable television provider or a satellite television service provider or the combination thereof. Indeed, the communications network 24 could include a combination of networks, wired and/or wireless. Within the communications network 24, there exists at least one Deep Immersion server 26 for managing the communications between and among the stations. For example, the DI server 26 can manage authentication of the Users A, B and C as well as organizing the selection and/or sharing of the main content and the immersive auxiliary content portion(s) transmitted among the stations over the communications network 24, along with user-exchanged video, audio, graphics, text and/or data.

The Users A, B and C at the stations 12a, 12b, and 12c, respectively, can obtain content for shared consumption from other than the communications network 24. For example, the Users A, B and C could obtain content from one or more broadcasters, illustratively depicted by broadcaster 28. The broadcasters could include conventional over-the air broadcasters, satellite television broadcasters, or cable television or telecommunications network providers.

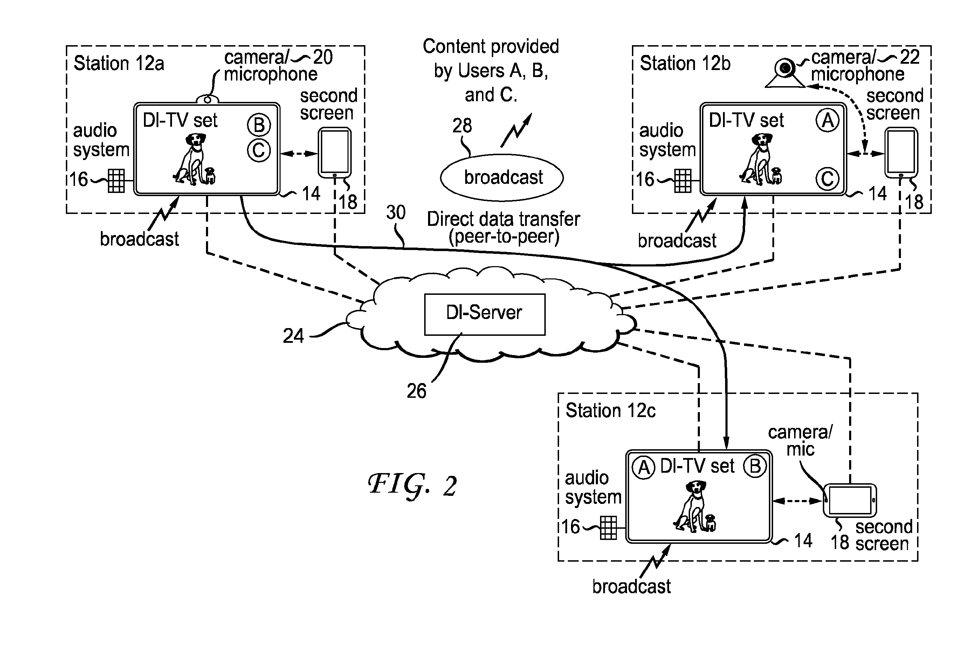

FIGURE 2 depicts a block schematic diagram of a second exemplary embodiment 10' of a DI content consumption system for practicing the shared DI content consumption technique of the present principles. The DI shared content consumption system 10' of FIG. 2 shares many of the same features as the system 10' of FIG. 1 with one additional feature. To facilitate more efficient sharing of Users video, audio, graphics, text and/or data, the DI shared content consumption system 10' of FIG. 2 can include a peer-to-peer network 30 for direct transfer of such information between and among stations, such as stations 12a, 12b, and 12c. Although shown as a separate entity in FIG. 2, the peer-to-peer network 30 could be part of the communications network 24. The user of the peer-to-peer network 30 could obviate the need for the DI server 26 assuming the functionality existed one or more of the DI television sets directly connected to the peer-to-peer network.

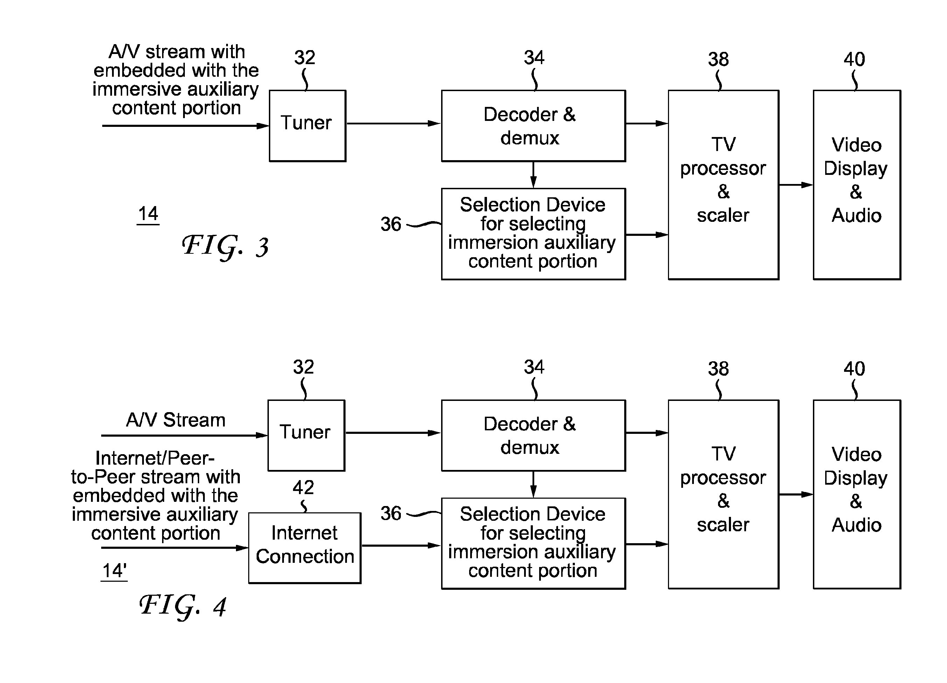

FIGURE 3 depicts a first embodiment 14 of the DI television set of the Deep Immersive (DI) shared content consumption systems 10 and 10' of FIGS. 1 and 2, respectively. The DI television set 14 of FIG. 3 includes a tuner 32 tuned to receive an audio-visual (A/V) stream comprising one or more pieces of main content, (e.g., movies and/or television programs) embedded with one or more immersive auxiliary content portions, which as discussed can include audio, video text, graphics and/or data or any combination thereof. The A/V stream received by the tuner 32 typically originates from the broadcaster 28 of FIGS. 1 and 2 but could originate from other sources.

The tuner 32 tunes a selected piece of main content for receipt by a decoder and de-multiplexer 34 along with the immersive auxiliary content portions. In practice, the decoder and de-multiplexer 34 typically comprises an MPEG decoder and de-multiplexer. A selection device 36 receives the immersive auxiliary content portions, as decoded by decoder and de-multiplexer 34. In response to input from the user, the selection device 36 selects one of the decoded immersive auxiliary content portions for input to a television processor and scaler 38. The selected piece of main content decoded by the decoder and de-multiplexer 34 along with the immersive auxiliary content portion selected by the selection device 36 first undergo blending and then processing and by a television processor and scaler 38 prior to receipt by a reproduction arrangement 40. The reproduction arrangement 40 includes a display device (not shown) for display of video and an audio reproduction system, such as the audio system 16 of FIGS. 1 and 2 for reproduction of audio. The television processor and scaler 38 in the DI television set has ability to scale icons displayed on the display device, as may become necessary, for example, when a large number of users have joined the deep-immersion content sharing session.

FIGURE 4 depicts a block schematic diagram of a second embodiment 14' for the DI television set of FIGS. 1 and 2. The DI television set 14' of FIG. 4 includes a similar structure as the DI television set of 14 of FIG, 3 with many elements in common so like reference numbers refer to like elements. Unlike the DI television set 14 of FIG. 3 which receives an A/V stream having pieces of main content embedded with immersive auxiliary content portions, the DI television set 14' of FIG receives the main content pieces separately from the immersive auxiliary content portions. The DI television 14' of FIG. 4 receives an A/V stream containing one or more pieces of main content at the tuner 32. However, in contrast to the DI television set 14 of FIG. 3, the DI television 14' of FIG. 4 receives, via an Internet connection 42, a Stream originating from the Internet or from the Peer-to-Peer network 30 of FIG. 2 that includes one or more immersive auxiliary content portions 42 for transmission to the selection device 36. Otherwise, the DI television 14' of FIG. 4 operates the same as the DI television 14 of FIG. 3. The Internet connection can receive the Internet/Perr-to-Peer stream via a wired or wireless network (e.g., WiFi) (not show).

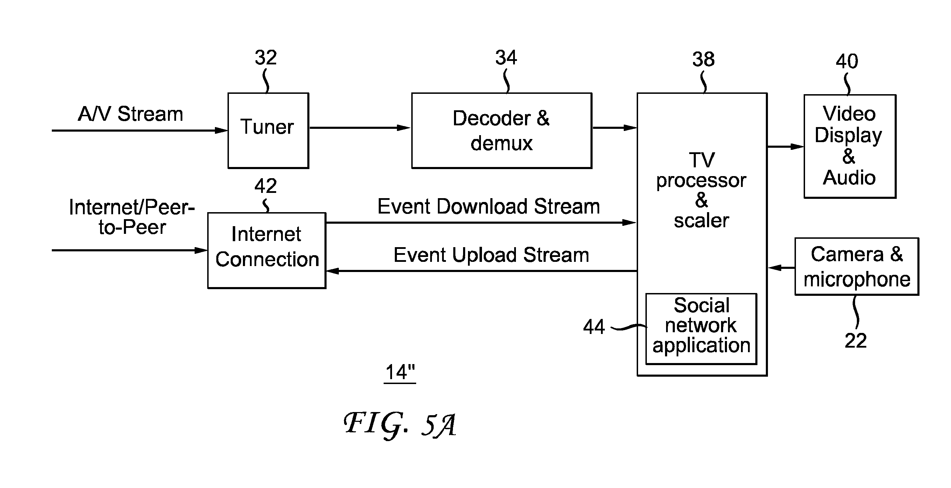

FIGURE 5A depicts another preferred embodiment 14" of a DI television in accordance with an aspect of the present principles. The DI television 14" of FIG. shares features in common with the DI television sets 14 and 14' of FIGS 3 and 4 and like reference numbers refer to like elements in the figures. Like the DI television 14' of FIG. 4, the DI television 14" of FIG. 5A receives an Internet stream with one or more immersive auxiliary content portions. Unlike the DI television 14' of FIG. 4 which includes a separate selection device 38 for selecting one of the immersive auxiliary content portions, the TV scaler and processor 38 of the DI television 14" of FIG. 5A performs such selection. In practice, the TV scaler and processor 38 of the DI television 14" of FIG. 5A selects one of the immersive auxiliary content portions in response to a user command entered through a remote control (not shown) or entered via the second screen device 18 of FIG. 1.

The TV scaler and processor 38 of each DI television set, as exemplified by the DI television set 14", has the ability to establish various events associated with corresponding operating conditions. Such an event could comprise a change operation initiated locally or at a remote station. A channel change operation initiated locally would result in the DI television set of the local user transmitting an Event Upload Stream containing information associated with that channel change to the DI television set at the other stations. Conversely, a channel change operation initiated at a remote station would result in receipt of an event download stream indicative of that at event the TV scaler and processor 38 of the local DI television set. Other operating changes would result in transmission of an Event upload stream or the receipt on an event download stream, depending on whether the operating change occurred locally or remotely, respectively.

As depicted in FIG. 5A, the TV scaler and processor 38 of the DI television 14" receives video and audio from the local user via a camera and microphone arrangement 22. The video and audio received by the TV scaler and processor 38 from the camera and microphone arrangement 22 is sent via an Event Upload Stream through the DI Server 26 to other stations. Conversely, the TV scaler and processor 38 receives video and audio from other users via an Event Download Stream.

In practice, the TV scaler and processor 38 of the DI television set 14" of FIG. 5A has the capability of running one or more social network applications 44, such as but not limited to Facebook or the like. Using the social network application 44, a user can make identify other users with whom to interact (e.g., share images and sound) while sharing content with such other users.

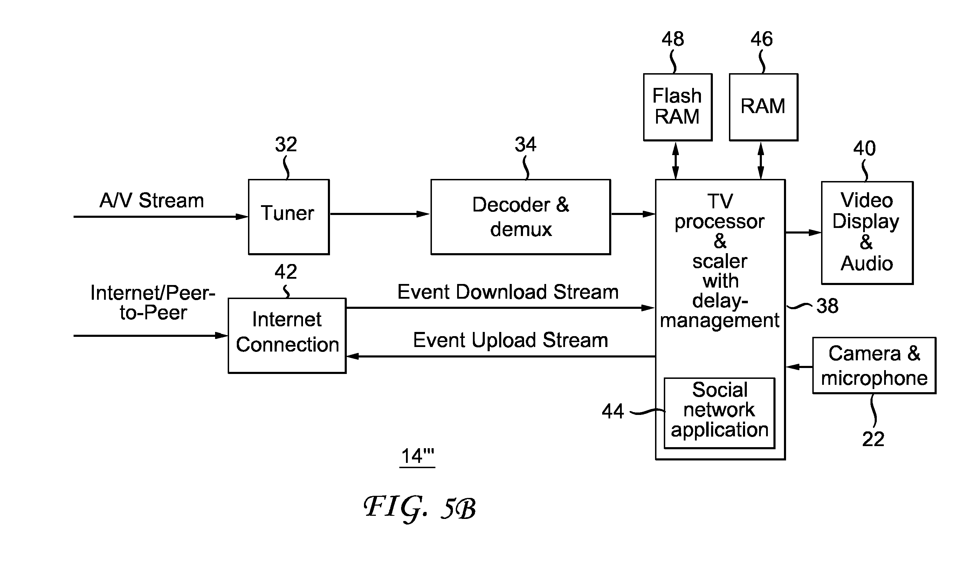

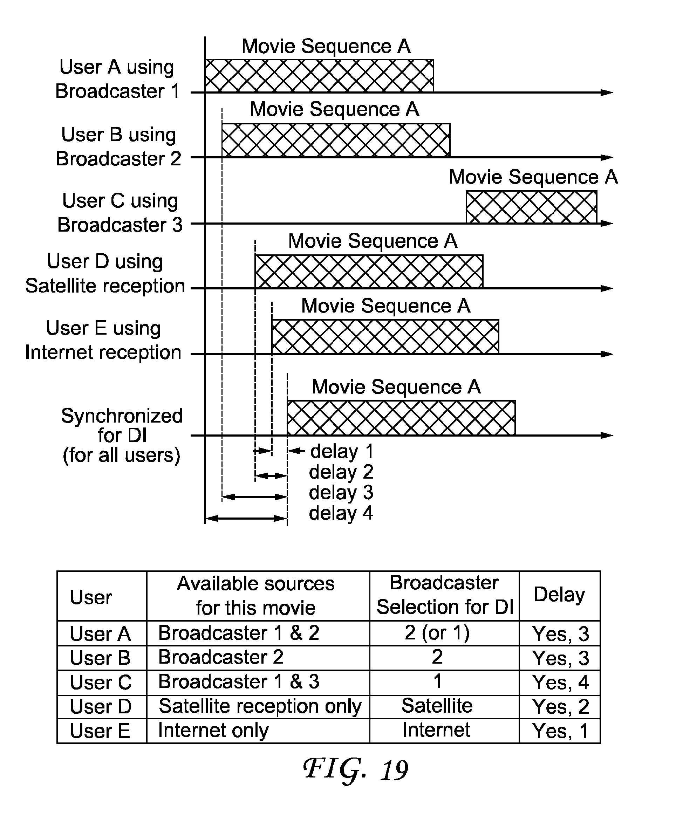

FIGURE 5B depicts a block schematic diagram of yet another embodiment of a DI television set 14"' in accordance with an aspect of the present principles. The DI television set 14'" of FIG. 5B shares many features in common with the DI television set 14" of FIG. 5A and like reference numbers describe like elements. In addition to including all of the elements of the DI television set 14" of FIG. 5A, the DI television set 14'" of FIG. 5B includes one or more memories, illustratively depicted as Random Access Memory (RAM) 46 and Flash RAM 48, both coupled to the TV scaler and processor 38. As described in detail hereinafter with respect to FIG. 19, the RAM 46 and the Flash RAM 48 enable the TV scaler and processor 38 to store main and immersive auxiliary content portions to accommodate any delay between users, thereby assuring synchronicity.

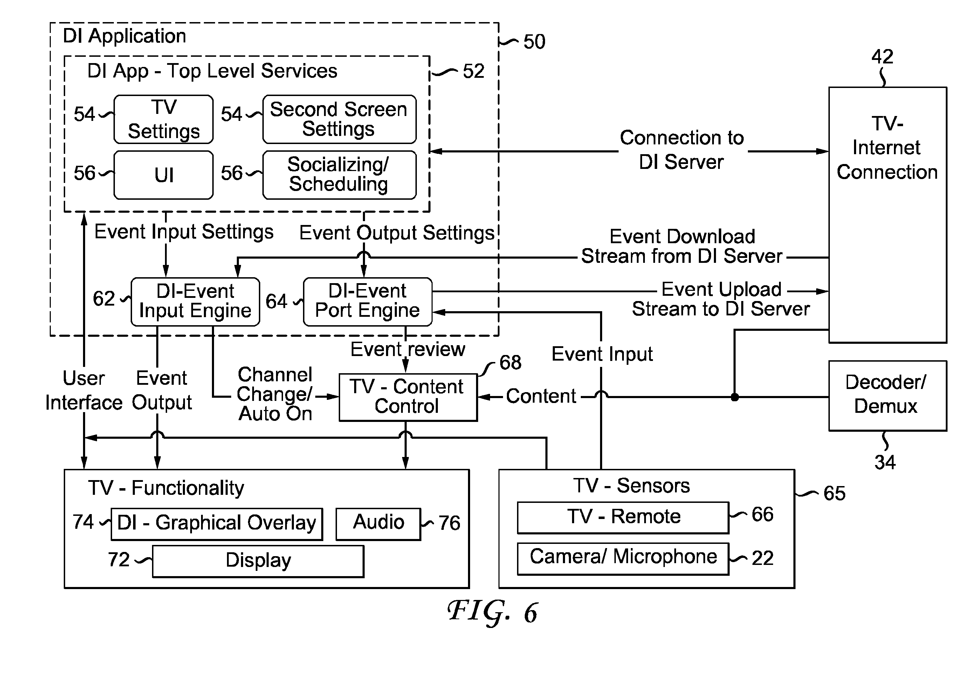

FIGURE 6 depicts a block diagram of various software elements present in the DI television apparatus 14, 14', 14" and 14'" of FIGS 3, 4, 5A and 5B, respectively. Each DI television set embodiment has a Deep Immersive (DI) software application 50, which includes a top-level services application 52 with the capability of exchanging information with the DI server 26 of FIGS. 1 and 2. The top-level services application 52 includes four sub applications 54, 56, 58 and 60. The sub-application 54 manages operating settings of the DI television set such as settings associated with the display (e.g., brightness, contrast, aspect ratio etc.), channel selection, parental control and the like. The sub-application 56 controls the user interface associated with the DI television set and thus serves enables the user to change aspects of the user interface, including the nature and characteristics of the information displayed by the user interface. The sub-application 58 controls the interaction between the DI television set and the second screen device 18 of FIGS 1 and 2. For example, the sub-application 58 can control various screen settings associated with the second screen device 18. The sub-application 60 controls scheduling of content for sharing with other users as well as interactions with such other users. While the DI systems 10 and 10' of FIGS. 1 and 2 depicts a single second stream device 18, in practice, a user could employ a plurality of such devices, such as the combination of two smart phones, a smart phone and a tablet or a smart phone and a laptop computer for example. → The top-level services application 52 controls a DI Event Input Engine 62 and a DI event output engine 64. The DI Event Input Engine 62 represents software functionality imparted to a processor (not shown) in the DI television to perform certain functions including handing of event settings as well as handling Event download streams for scheduled shows. The Event download streams include video images and audio from remote users. The DI-Event Post Engine 64 represents software functionality imparted to the same or another processor (not shown) in the DI television to perform certain functions, including generation of an Event upload stream that includes video image and audio of the local user for transmission via the Internet connection 42 to the users at remote stations. To this end, DI Event Post Engine 64 receives event inputs from a TV sensor block 65 that generates signals in response to input signals received from a television remote control 66 and input images and audio received from the camera and microphones at the DI set, such as the integrated camera and microphone arrangement 20, or the separate camera and microphone device 22 or the camera and microphone signals from the second screen device.

A TV content control block 68 in the DI television set converts commands from the DI Event Input Engine 62, such as channel change and Auto-on commands into a format suitable for execution by a TV-functionality block 70 which controls the display and audio functions of the DI television set. In a similar manner, the TV content control content block 68 also converts commands from the DI Post Engine 64, including event review commands into a format suitable for execution by the TV functionality block 70.

The TV functionality block 70 controls the video and audio reproduction by the DI television set. To this end, the TV functionality block includes a display control block 72 for controlling a video display device (not shown). A DI graphical overlay block 74 interfaces with the display control block 72 to overlay both the user interface as well as images from other users on the video sent to the display device. An audio control block 76 controls auto reproduction by the audio system 16 of FIG. 1.

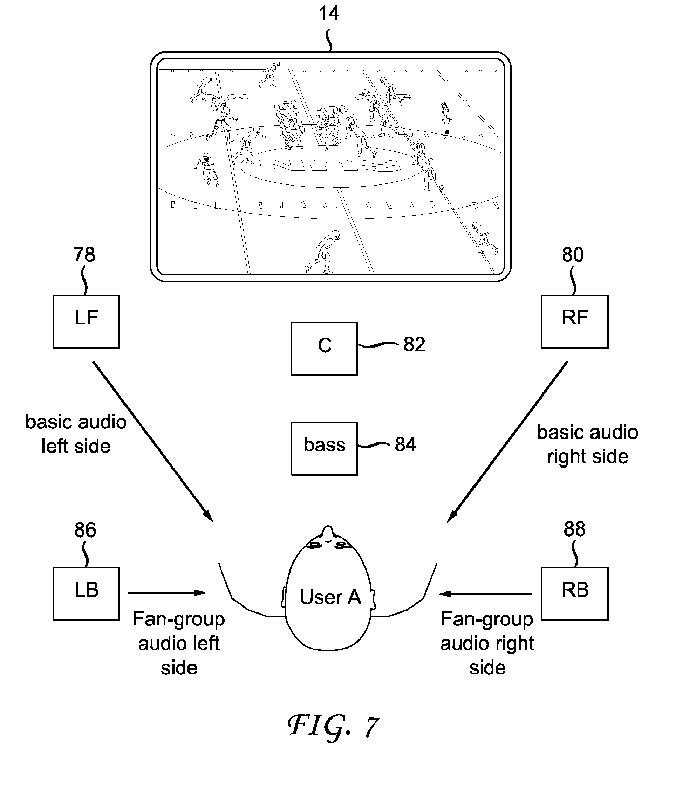

FIGURE 7 depicts a first mode of operation of the DI systems 10 and 10' of FIGS. 1 and 2, respectively, at a local user's premise, the local user illustratively depicted as User A. For simplicity sake, FIG. 7 shows the user directly facing the DI television set 14 (although the set could take the form of the DI television sets 14', 14" and 14"' depicted in FIGS 4, 5A and 5B, respectively.) While the User A could make use of the DI television set 14 to reproduce any kind of content, for purposes of illustration, assume that the User A makes use of the DI television set to watch a sporting event, such as a football game. The visual images of this sporting event even will appear on the display screen of the DI television set 14, while the audio is reproduced on a left front speaker 78, a right front speaker 80, a center speaker 82 and a bass speaker 84.

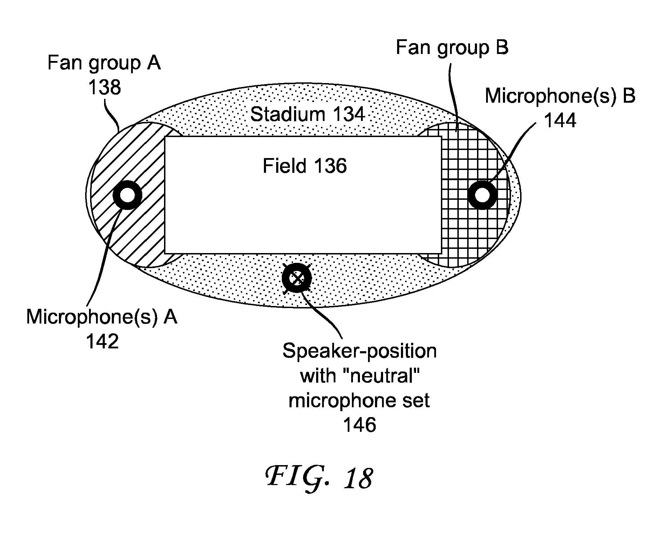

In the illustrated embodiment of FIG 7, the immersive auxiliary content portion selected by User A comprises live audio captured from one or more selected fan groups at the venue where the sporting event takes place as described in detail with respect to FIG. 18. The User A hears the left-side fan group audio on the left back speaker 86 and rights-side fan group audio right side on the right back speaker 88.

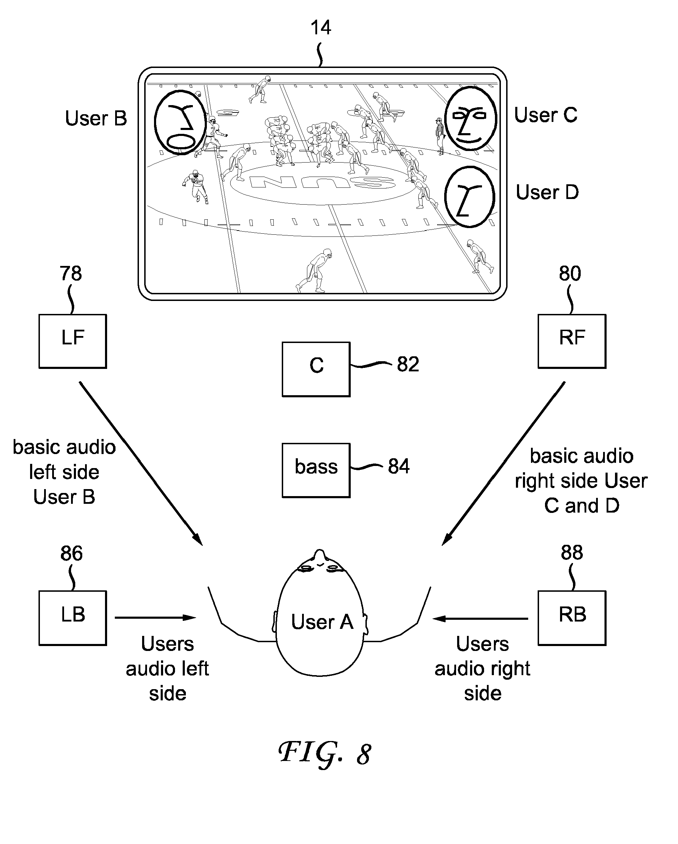

FIGURE 8 depicts a second mode of operation of the DI systems 10 and 10' of FIGS. 1 and 2, respectively at the premise of User A. The second mode of operation depicted in FIG. 8, like the first mode of operation depicted in FIG. 7, corresponds to a user watching a sporting event on the DI television set 14 while listening to the audio on the speakers 78-84. During the second mode of operation depicted in FIG. 8, the User A has chosen to join the sporting event with the Users B, C and D whose images appear on the screen of the DI television set 14. The second mode of operation depicted in FIG. 8 includes reproduction of audio from User B by the speaker 78 and reproduction of audio from the Users C and D via speaker 80. The left back and right back speakers 86 and 88, respectively, can reproduce audio from the remote users in addition to or in place of the fan group audio selected as the immersive auxiliary content portion in FIG. 7.

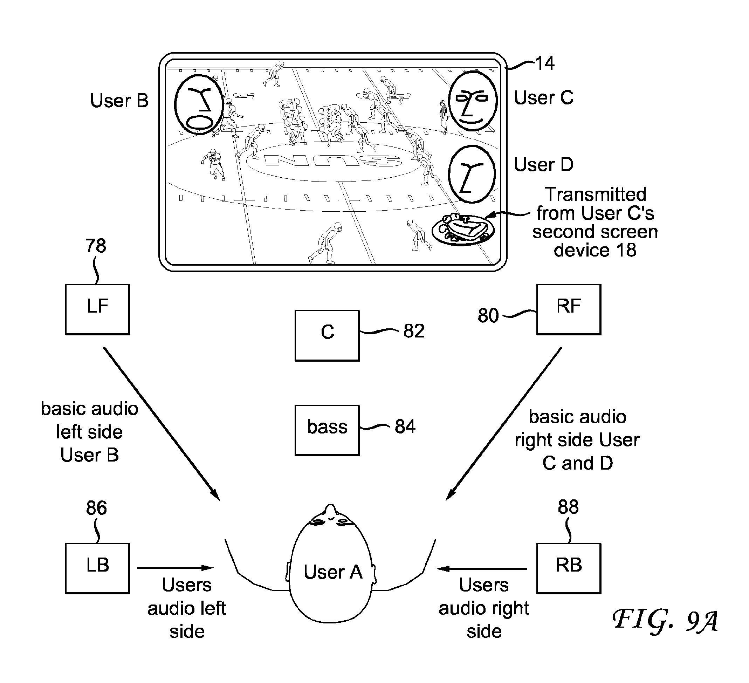

FIGURE 9A depicts a third mode of operation of the DI television set which is very similar to the second mode of operation depicted in FIG. 8. The third mode of operation depicted in FIG. 9A, like the first and second modes of operation depicted in FIG. 7 and 8, respectively, corresponds to a user watching a sporting event on the DI television set 14 while listening to the audio on the speakers 78-84. Like the second mode of operation depicted in FIG. 8, the third mode of operation depicted in FIG. 9A, includes the User A sharing the sporting event with the three remote Users B, C and D. In addition, the third mode of operation of FIG. 9A includes reproduction of audio from User B by the speaker 78 and reproduction of audio from the Users C and D via the speaker 80. The left back and right back speakers 86 and 88, respectively, can reproduce audio from the remote users in addition to or in place of the fan group audio selected as the immersive auxiliary content portion in FIG. 7.

The third mode of operation depicted in FIG. 9A includes not only the display of the images of the remote users (e.g., Users B, C, and D), but the display of images sent by such users. As depicted in FIG. 9A, the DI television set 14 includes the display of a plate of food sent by the User C from his second screen device 18 of FIG. 1, which could include a mobile telephone or the like.

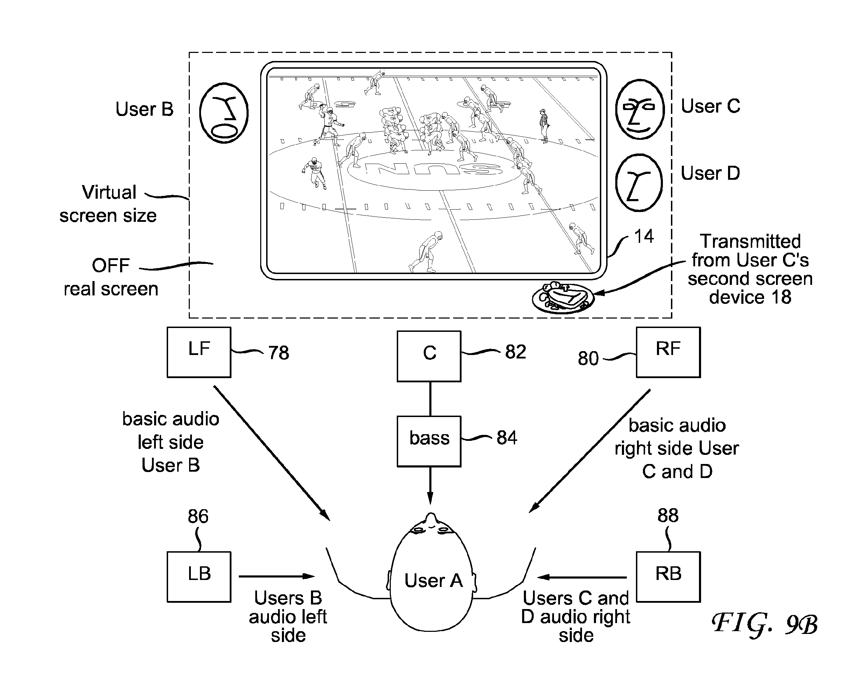

FIGURE 9B depicts a fourth mode of operation of the DI television set 14 very similar to the third mode of operation depicted in FIG. 9A. Like the third mode of operation, the fourth mode of operation corresponds to a user watching a sporting event on the DI television set 14 shared with the remote Users B, C and D. In addition, the third mode of operation of FIG. 9A includes reproduction of audio from User B by the speaker 78 and reproduction of audio from the Users C and D via the speaker 80. The left back and right back speakers 86 and 88, respectively, can reproduce audio from the remote users in addition to or in place of the fan group audio selected as the immersive auxiliary content portion in FIG. 7.

The fourth mode of operation depicted in FIG. 9B differs from the third mode of operation depicted in FIG. 9A by offering a screen-within-a-screen display. As depicted in FIG. 9B, the shared content (e.g., the sporting event) appears on an inner screen set within a second (virtual) screen which displays the images of the remote users (e.g., Users B, C, and D) together with any images sent by those users, such as the food plate image set by the User C from that user's second screen device 18 of FIG. 1.

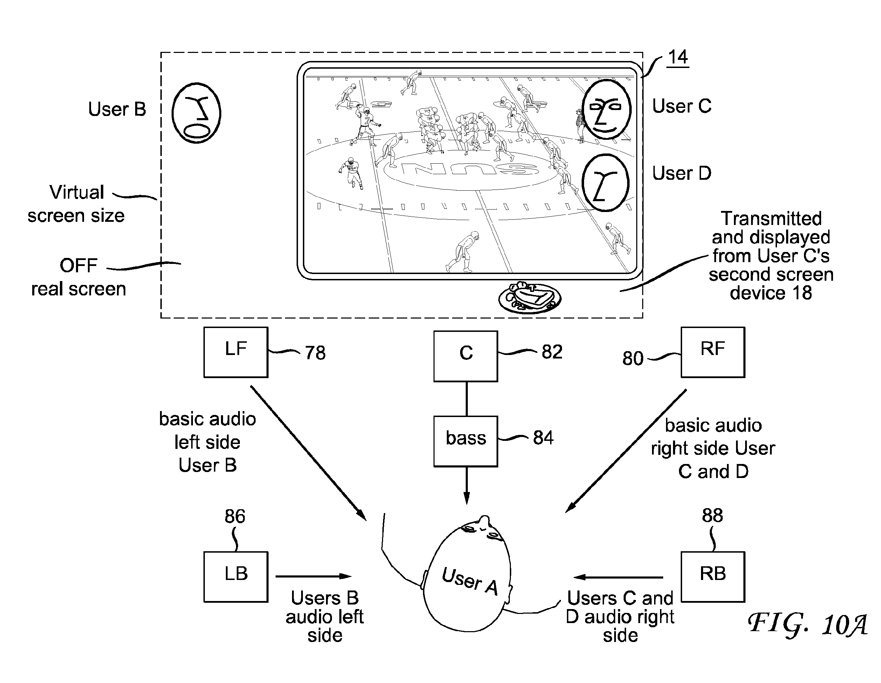

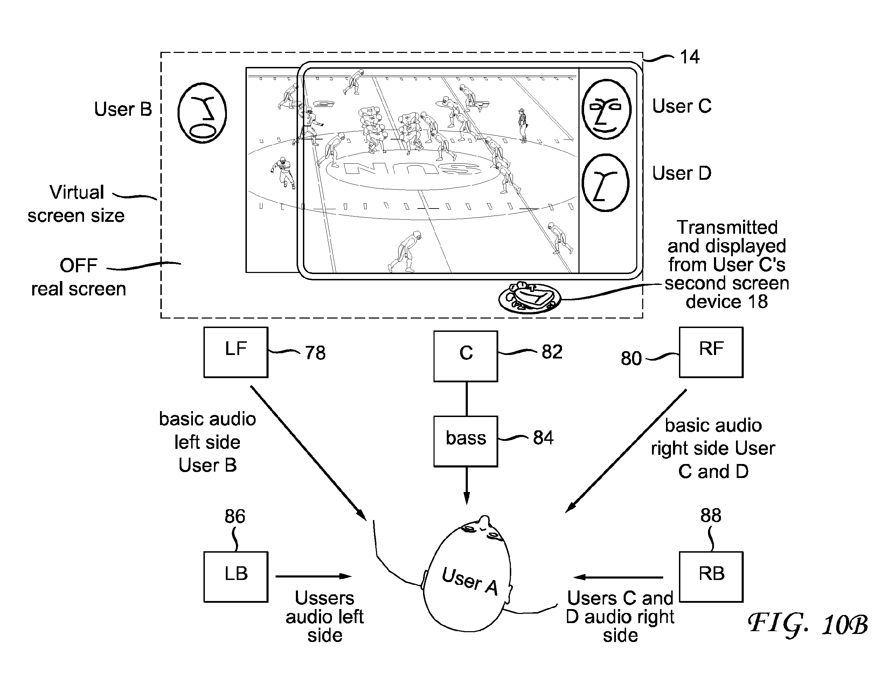

FIGURES 10A and 10B collectively depict a fifth mode of operation similar to the fourth mode of operation depicted in FIG. 9B. Like FIG. 9B, FIG. 10A depicts a screen-within-a-screen display, with the shared content (e.g., the sporting event) appearing on an inner screen within a second (virtual) screen which displays the images of the remote users (e.g., Users B, C, and D) together with any images sent by those users, such as the food plate image set by the User C from that user's second screen device 18 of FIG. 1. FIG. 10B shows the same screen-within-a-screen display as FIG. 10A except the inner screen has can be panned leftward, in response to user control. Although not shown, this fifth mode of operation could include zooming in addition to or in place of panning, scanning and/or tilting.

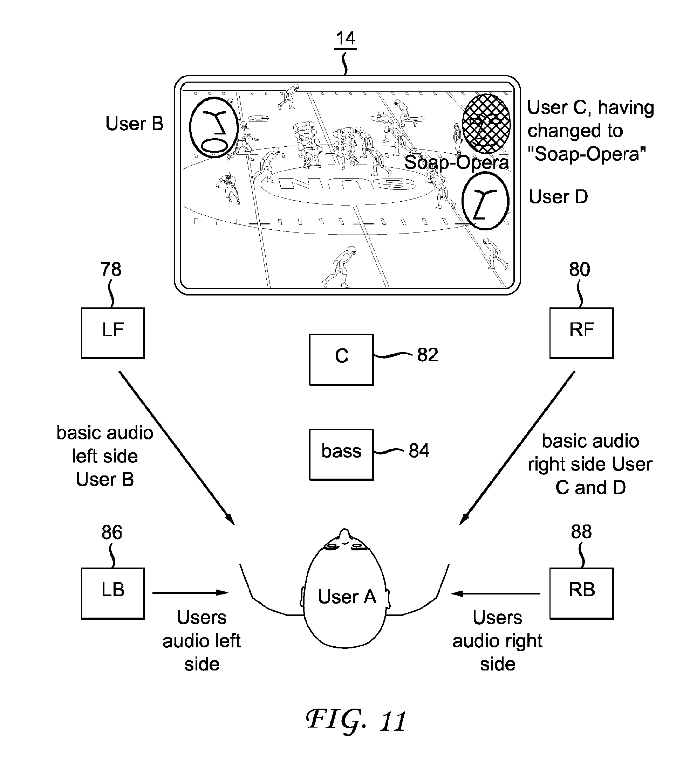

FIGURE 11 depicts a sixth second mode of operation of the DI systems 10 and 10' of FIGS. 1 and 2, similar to the second mode of operation in FIG. 8. Like the second mode of operation depicted in FIG. 8, during the sixth mode of operation depicted in FIG. 11, the User A has chosen to share the sporting event with at least three remote users, illustratively depicted as Users B, C and D. The images of the Users B, C and D appear on the screen of the DI television set 14. As long as the remote users B, C, and share the sporting event with the User A, the images of the remote user appear on the screen of the DI television set in their normal manner. However, should one of the remote users, such as remote User C, decide to switch programs to watch a soap opera instead, then the DI TV set 14 will now display the image of that user no longer watching the shared sporting event in a distorted manner, such as crosshatched, as seen in FIG. 11 or by a symbol or other indicator. By showing the image of User C as crosshatched, the DI TV set 14 can alert the local user that the remote User C is no longer sharing the sporting event.

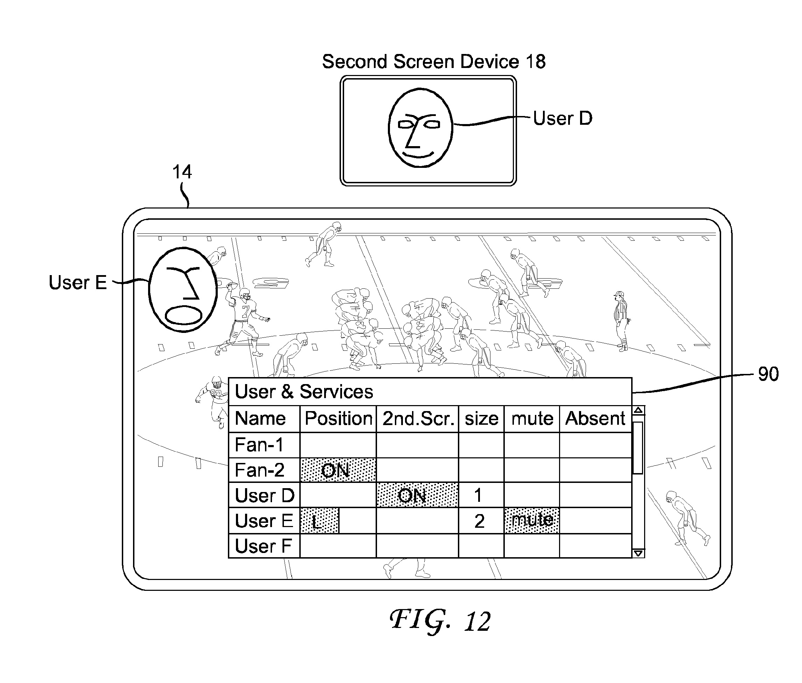

FIGURE 12 depicts organization of the screen of the DI television set of FIGS 3, 4, 5A, and 5B for indicating information about different users via a grid 90. The first two rows of the grid 90, which bear the legend "Fan-1" and "Fan-2", respectively, correspond different the two different fan groups attending the sporting event selected for content sharing. As discussed hereinafter with respect to FIG. 19, a user can select audio from one of these fan groups as an immersive auxiliary content portion for blending with the main content (i.e., the sport event itself) shared among other users. In this case, the content provider supplying the sporting event will supply the fan audio, either embedded in content or supply the fan audio separately, such as via the Internet connection 42 as depicted in FIGS. 4, 5A and 5B. As depicted in FIG. 12, the user has chosen the "Fan 2" audio, as depicted by the shaded box lying in the column "Position" and in the row "Fan 2."

The "Second Screen" column in the grid 90 of FIG. 2 has a box in lying in the column "Second Screen" and in the row "User D" shaded to indicate that the local user has chosen to display the image of User D on the local user's second screen device 18. The box in lying in the column "Size" and in the row associated with "User D" bears the legend "1" to indicate that the image of User D has a first size selected for display on the local user's second screen device. If the local user decided to display the image of the User D on the local user's DI television set, the box lying in the column "position" and lying in the row "User D" would appear shaded. Thus, when the local user wishes to display the image of User E on the local user's DI television set on the left-hand side of the screen, the box in the grid 90 lying in the column "Position" and lying in the row "User E" will appear shaded and will include the legend "L" to reflect this condition. Should the local user seek to mute the audio from the User E, then the box in the grid 90 lying in the column "Mute" and lying in the column "User E" will appear shaded and will bear the legend "mute" to indicate this condition. In the event that any of the users, such as User F, for example, decides to leave the content-sharing session, then the box lying in the column "Absent" and lying in the row of the now-de parted user will bear the legend "Absent" to reflect that this user has left the content sharing session.

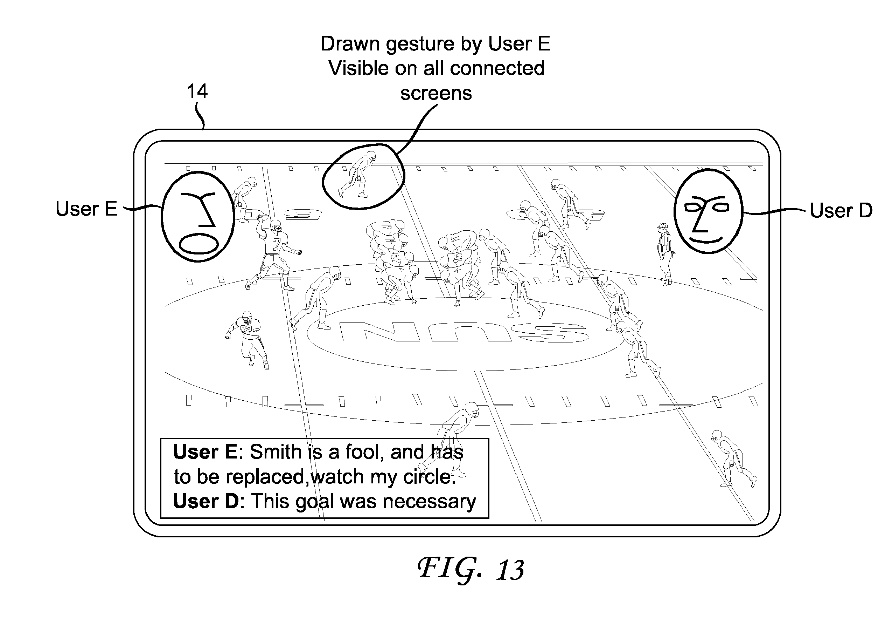

Referring to FIG. 13, the DI television set 14 of FIG. 2, (as well as DI television sets 14', 14" and 14"' of FIG. 4, 5A and 5B, respectively), have the capability of displaying text messages from users, as well as the ability to allow users to interact with the displayed content by entering drawn gestures. Thus, as depicted in FIG. 13, a user, such as User E, can draw a gesture, typically using his or her second screen device 18 of FIG. 2, for presentation on the DI television sets of the other users sharing that same content. In addition to displaying such drawn gestures, the DI television sets of the users sharing the same content can also display text messages shared among users as seen in FIG. 13.

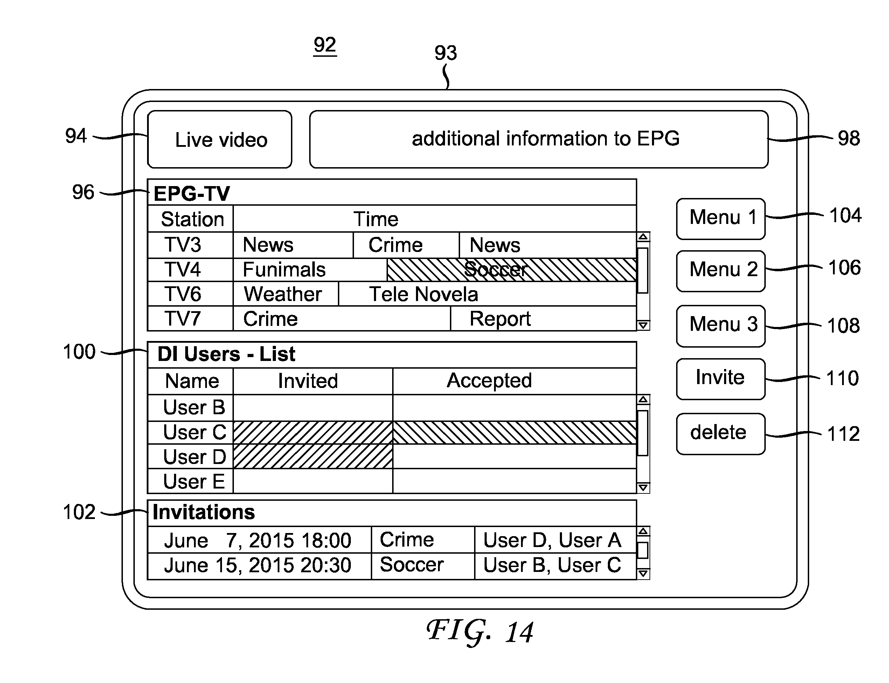

FIGURE 14 describes an exemplary application 92 for execution by the DI television set 14 for enabling the local user to invite one or other users to share content. The application 92 includes an on-screen display 93 that includes display areas 94, 96, 98, 100, and 102. The display area 94 displays the live video that corresponds to the shared content selected by the local user or selected by a remote user. The display area 96 displays an electronic program guide of a type well known in the art in the form of a grid array having rows corresponding to content sources (e.g., television stations or other content providers) and columns corresponding to time slots. Each grid entry in the electronic program guide appearing in the display area 96 corresponds to a particular program (e.g., a particular piece of main content) provided by a particular one of the content sources at a particular time and the grid entry typically includes the same or other legend associated with that program. The grid entry bearing the program legend "soccer" in FIG. 14 appears shaded to indicate selection of that program for shared content consumption. The display area 98 displays additional electronic program guide data. Such additional program guide data can include details regarding the currently tuned program.

The display area 100 displays a grid array associated with user invitations which typically includes a first column "Name" associated with the name of the DI users, a second column "Invited" corresponding to invitations sent to such DI users as listed in the first column, and a third column "Accepted" corresponding to accepted invitations. Each row of the user invitation grid array displayed in the display area 100 corresponds to a particular user, such as a particular one of the users B, C, D and E, for example. The corresponding grid entries in the user invitation grid array displayed in the display area 100 will appear shaded or not depending on the status of that user associated with the particular activity for the corresponding grid array column. This for example, the user invitation grid array depicted in the display area 100 indicates that User C has received an invitation to share content and has accepted that invitation, whereas user D has also received an invitation but has not yet accepted.

The display area 102 displays a grid array associated with the status of user invitation. The user invitation status grid array typically has a first column that displays a particular program display slot, a second column that displays programs corresponding to the time slots in the first column, and a third column that displays the names of the users invited to view the programs. Each row in the user invitation grid array displayed in the display area 102 corresponds to a particular program time slot and thus, the entries in this row correspond to program in this time slot, and the user(s) invited to share this program.

In addition to the display areas 94, 96, 98, 100 and 102, the display screen 93 associated with the application 92 depicted in FIG. 14 includes a set of buttons, illustratively depicted as "menu" buttons 104, 106 and 108, "invite" button 110 and "delete" button 112. Selection of a particular one of the menu buttons 104, 106 and 108 allows the local user to obtain a menu associated with the selected button. While FIG. 14 depicts the three menu buttons 104, 106 and 108, the application 92 could readily provide a larger or smaller number of menu buttons as desired. The "invite" button, when actuated by the user signals the application 92 to extend an invitation to a selected remote user. The "delete" button, when actuated by the user signals the application 92 to cancel an action previously taken by the user.

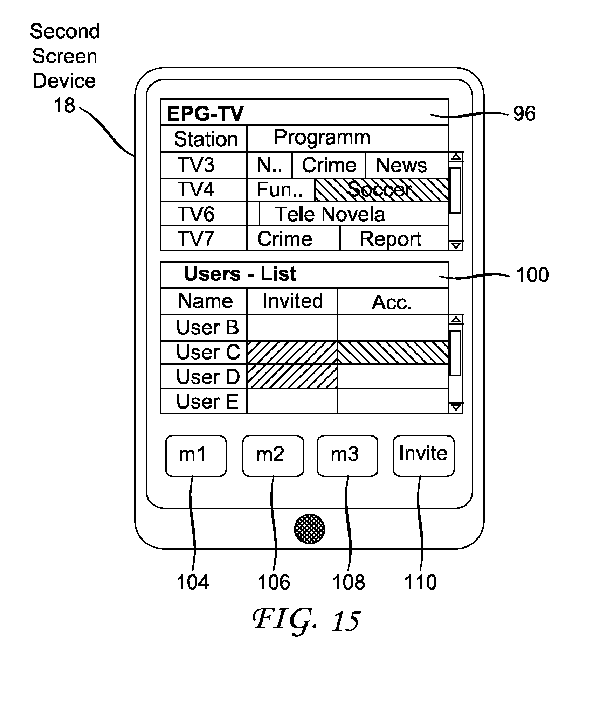

The application 92 can also run the second screen device 18, as depicted in FIG. 15. For ease of illustration, only the display areas 96 and 100, along with the menus buttons 106-108 and the invite button 110 associated with the on screen display 93 of the application 92 (both of FIG. 14) appear in FIG. 15 although depending on its screen size, the second screen device 18 could display a smaller or larger portion of the on-screen display 93.

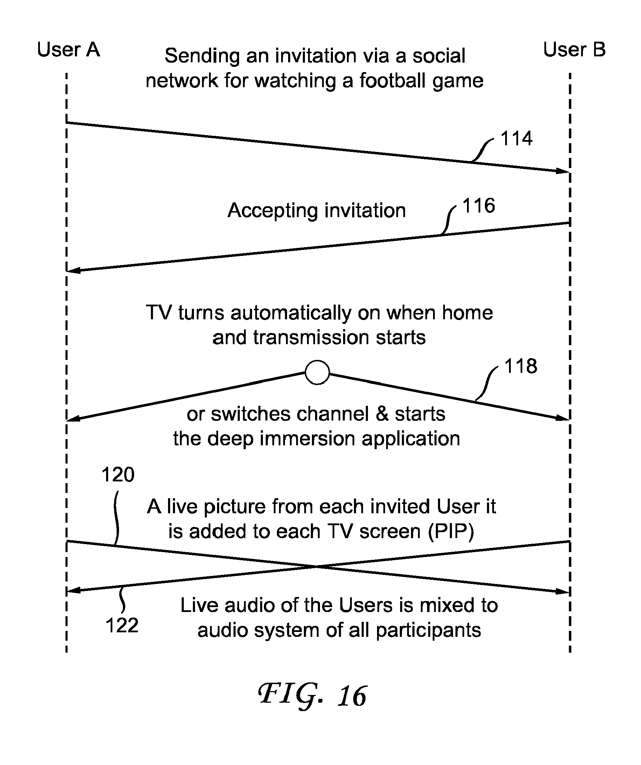

FIGURE 16 depicts a timing diagram showing the sequence of activities associated with inviting users to share content. For the sake of simplicity, the invitation timing diagram of FIG. 16 depicts the interaction between two users, illustratively depicted as User A, the "inviting" user, and user B, the "invited" user. The sequence begins with User A extending an invitation to User B during step 114 to watch simultaneously a particular program, such as a sporting event. The User A could extend the invitation using a variety of different mechanisms, such as telephone, e-mail, or social network interaction. The particular mechanism employed by the User A to extend an invitation to User B to watch a particular program simultaneously would necessarily appraise the DI systems 10 and 10' of FIGS. 1 and 2, respectively, to track the invitation. Upon receipt of the invitation, the User B will either accept or reject by sending a notification to that effect during step 116. Typically, User B will respond using the same modality employed by User A to send the invitation, although User B could easily employ a different modality. The modality used to accept or reject the invitation would necessarily appraise the DI system of the response of User B to the invitation,

A rejection of the invitation by User B would presumably terminate the interaction. Assuming that User B accepted, then, in response to such acceptance the DI system will tune the DI television sets of Users A and B to the selected program during step 118. Thereafter, a live picture of each invited user (e.g., User B) now appears on the screen of the other users (in this case, User A) during step 120. If User B is not yet ready, a symbol or other indicator could be placed on User A's screen. Live audio from the invited users who have accepted the invitation (e.g., User B) is now mixed with the audio of the shared content during step 122. Note that steps 120 and 122 do not need to occur in sequence, but could occur simultaneously or either could precede the other.

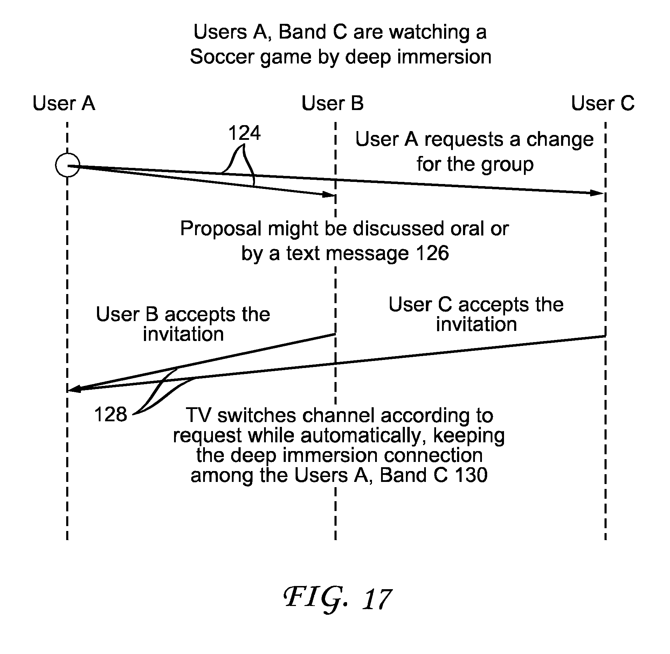

FIGURE 17 depicts a timing diagram showing the sequence of activities associated with a channel change request during shared content consumption, among users, illustratively depicted as Users A, B, and C. If during shared content consumption the Users A, B and C, a user, such as User A, now wants to change channels to simultaneously share other content, then that user will send a request during step 124 to each user to change channels. In response to such a request, the users can discuss the desirability of changing channels during step 126 using any one of a variety of different mechanisms. For example, users A, B and C could discuss the channel change request by telephone, via e-mail or social media. Assuming after such a discussion the users B and C agree to the channel change request from User A, then Users B and C send their the channel change acceptances during step 128. The DI system, when appraised of such channel change acceptances, will switch the channels of the users during step 130, while still maintaining the deep immersive share content experience when viewing the previous channel.

The auxiliary content portion blended with the main content to achieve deep immersive content consumption can take many forms. As discussed, an exemplary auxiliary content portion for blending with main content in the form of a sporting event could comprise live fan audio originating from the venue hosting such an event. FIG. 18 depicts a simplified view of a stadium 134 having a field 136 on which two opposing teams (not shown) play a game, for example soccer. Fan groups A, designated by reference number 138, and Fan Group B, designated by reference number 140, each supporting an opposite one of the two teams, occupy opposite ends of the stadium 136. Microphones 142 and 144 capture audio from the fan groups 138 and 140, respectively. Depending on the users' team preference, the audio associated with a particular one of fan groups 136 and 138, as captured by microphones 140 and 142, respectively, can be selected as the auxiliary content portion for blending with the main content, e.g., the audio from the sporting event. The audio from the sporting event can also include audio from a microphone 146 located in a "neutral" position within the stadium 136.

FIGURE 19 depicts a technique for synchronizing the content shared among users. As depicted in FIG. 19, various users, exemplified by Users A, B, C, D, and E, can obtain the same content (e.g., movie sequence A) from a variety of different sources. For example, Users A and B can obtain the movie sequence A from any Broadcasters 1, and 2, respectively, whereas User C can obtain the movie sequence A from either of Broadcaster 1 or 3, although FIG. 19 depicts the User as obtaining the movie sequence A from Broadcaster 3. In practice, User D obtains the movie from a satellite television provider, whereas User E obtains the movie from an Internet content source. Typically, the various content sources from which the users A-E can obtain the movie sequence A lack synchronism so that different delays exist. As depicted in the chart in FIG. 19, the broadcaster 1 offers movie sequence A first. After a first delay, designated as "delay 1 ", the broadcaster 2 offers the movie sequence A. The satellite television provider and the Internet content source offer movie sequence A after longer delay intervals, designated as "delay 3 and "delay 4," respectively. The delay interval associated with broadcaster 3 is very large exceeding delay interval 4.

To assure synchronization, the DI system of FIGS. 1 and 2 will assign content sources and establish associate delays for initiating shared content consumption as indicated in the chart in FIG. 19. Thus, the User A should receive the movie sequence A from either of broadcasters 1 or 2. User B should obtain the movie sequence from broadcaster B. With regard to User C, he or she should obtain the movie sequence A from broadcaster 1 rather than broadcaster 3 since broadcaster 3 suffers from a large delay. Since Users D and E only have access to satellite television and Internet reception, respectively, these users receive the movie sequence A from such sources.

Based on the above-described sources of content for the Users A-E, the chart at the bottom of FIG, 19 indicates the delay associated with each user's receipt of the movie sequence A to assure synchronicity. Assuming that Users A and B both receive the movie sequence from broadcaster 2, both of these users with incur a delay corresponding to delay interval 3. When the user C receives the movie sequence from the broadcaster 1, that user will incur a delay corresponding to delay interval 4. The users D and E who receive the movie sequence A via satellite and Internet reception, respectively, incur delays corresponding to delay intervals 2 and 1, respectively. Likwise other delays caused by transmission or signal processing are equalized in this fashion.

The foregoing describes a technique for deep immersive shared content consumption.

## Claims

1. A method for shared content consumption among at least two users, comprising:
selecting, by at least one user, main content having different auxiliary content portions for selection;
selecting, by the at least one user, an auxiliary content portion for blending with the main content for sharing with at least one other user;
receiving by the at least one user feedback from the at least one other user during sharing of the main content blended with the selected auxiliary content portion.

2. A system for shared content consumption among at least two users, comprising:
a deep immersive server (26) configured to (1) manage consumption of main content shared among at least one user and at least one other user responsive to selection of the main content by at least one of the two users, (2) manage shared consumption of an auxiliary content portion blended with the main content portion responsive to selection of the auxiliary content by at least one of the two users; and (3) provide feedback from at least one user to the at least one other user the during sharing of the main content blended with the selected auxiliary content portion.

3. The method according to claim 1 or system according to claim 2 wherein the main content comprises at least one of audio, video, data, graphics, and text.

4. The method according to claim 1 wherein the different selectable auxiliary content portions comprise at least one of audio, video, data, graphics, and/or text related to the main content.

5. The method according to claim 4 or system according to claim 2 wherein the main content includes a television program in the form of a sporting event and where the selected auxiliary content portion comprises live audio from that sporting event.

6. The method according to claim 1 or system according to claim 2 wherein the feedback from the at least one other user comprises at least one of at least one of audio, video, data, graphics, and/or text.

7. The method according to claim 1 or system according to claim 2 wherein the main content and the auxiliary content portions are received together by the at least one user in common stream or separately.

8. The method according to claim 7 wherein the main content and the auxiliary content portions are received by the at least one user via different communication channels.

9. The method according to claim 1 wherein the selected main content blended with the selected auxiliary content portion shared by the at least one user is delayed relative to shared consumption by the at least one other user to achieve synchronization.

10. The method according to claim 1 further including the step of sending, from the at least one user to the at least one other user feedback during sharing of the main content blended with the selected auxiliary content portion.

11. The system according to claim 2 wherein the auxiliary content portion comprises at least one of audio, video, data, graphics, and/or text related to the main content.

12. A deep immersive content receiving apparatus for receiving content shared among at least two users, comprising;
a tuner (32) responsive to user input for selecting main content having associated therewith different auxiliary content portions for selection;
decoder and demultiplexer (34) for decoding and demultiplexing the selected main content and the different auxiliary content portions associated therewith;
a selection device (36) for selecting one of the different auxiliary content portions responsive to user input;
a television processor and scaler (38) for blending decoded and demultiplexed selected main content and selected auxiliary content portion for subsequent reproduction; and
a video and audio reproduction device for reproduction of the blended the selected main content and selected auxiliary content portion.

13. The deep immersive content receiving apparatus according to claim 18 wherein the television processor and scaler receives audio and video images from the at least one user for formatting and transmission to at the least one other user..

14. The deep immersive content receiving apparatus according to claim 18 further including at least one memory (46) for storing the main content and different auxiliary content portions associated therewith for delayed consumption.
